# EUROPÄISCHE PATENTANMELDUNG

(11) **EP 4 418 705 A1**
(43) Veröffentlichungstag der Anmeldung: **21.08.2024**
(21) Anmeldenummer: 23157621.6
(22) Anmeldetag: 20.02.2023
(51) Int. Cl.: H04W 4/50, H04L 41/0806, H04L 67/00

(54) **VERFAHREN ZUR INTEGRATION EINER ANLAGENKOMPONENTE IN EIN KOMMUNIKATIONSNETZWERK EINER TECHNISCHEN ANLAGE**

(71) Anmelder: Siemens Aktiengesellschaft, 80333 München (DE)
(72) Erfinder: Aschauer, Hans, 81829 München (DE); Becker, Stefan, 91325 Adelsdorf (DE); Falk, Rainer, 85586 Poing (DE); Feist, Christian Peter, 80689 München (DE); Laurig, Frank, 92369 Sengenthal (DE); Palmin, Anna, 76187 Karlsruhe (DE)
(74) Vertreter: Siemens Patent Attorneys

(57) **Zusammenfassung**

Vorgeschlagen wird ein Verfahren zur Integration einer Anlagenkomponente (1) in ein Kommunikationsnetzwerk einer technischen Anlage, umfassend:
a) Ermitteln eines Integrationsdienstes (7) der technischen Anlage durch die Anlagenkomponente (1),
b) Übermitteln von Informationen bezüglich von der Anlagenkomponente (1) unterstützter Integrationsverfahrenstypen an den Integrationsdienst (7) der technischen Anlage,
c) Unter Berücksichtigung von dem Integrationsdienst (7) der technischen Anlage zur Verfügung stehenden Informationen bezüglich von dem Kommunikationsnetzwerk der technischen Anlage unterstützter Integrationsverfahrenstypen und der von der Anlagenkomponente (1) übermittelten Informationen bezüglich von der Anlagenkomponente (1) unterstützter Integrationsverfahrenstypen, Prüfen durch den Integrationsdienst (7), ob eine automatisierte Integration der Anlagenkomponente (1) in das Kommunikationsnetzwerk der technischen Anlage möglich ist,
d) Für den Fall, dass die automatisierte Integration der Anlagenkomponente (1) in das Kommunikationsnetzwerk der technischen Anlage möglich ist, Durchführung der Integration der Anlagenkomponente (1) in das Kommunikationsnetzwerk der technischen Anlage.

## Beschreibung

Die Erfindung betrifft ein Verfahren zur Integration einer Anlagenkomponente in ein Kommunikationsnetzwerk einer technischen Anlage. Außerdem betrifft die Erfindung einen computerimplementierten Integrationsdienst und ein computerimplementiertes Werkzeug.

Die sog. "Secure Device Onboarding" Verfahren (z.B. BRSKI) finden zunehmend Einzug in den OT-Umgebungen, insbesondere im Einklang mit dem Grundprinzip von Zero Trust "Never trust - always verify". Einerseits ermöglichen die entsprechenden Verfahren eine sog. Identitätsprüfung (engl. Proof of Identity) und/oder die Originalitätsprüfung (engl. Proof of Originality, siehe z.B. die Anforderung der IEC 62443 "Provisioning product supplier roots of trust). Andererseits ermöglichen sie die Provisionierung der einsatzumgebungsspezifischen Credentials (z.B. den einsatzumgebungsspezifischen, für die Authentifizierung erforderlichen Zertifikaten mit den zugehörigen kryptographischen Schlüsseln) auf die OT-Geräte auf sichere Art und Weise.

Als besonders erstrebenswert haben sich dabei die sog. Secure Zero Touch Device Onboarding-Verfahren erwiesen, weil sie eine Identitäts-/Originalitätsprüfung sowie die Provisionierung von einsatzumgebungsspezifischen Credentials vollautomatisiert, d.h. ohne jegliche Unterstützung durch den Benutzer, ermöglichen und somit als besonders benutzerfreundlich gelten. Sogar das automatische Finden der (in der Regel als Registrar bezeichneten) Instanz, gegen die die Identitäts-/Originalitätsprüfung erbracht wird, im Netzwerk, und die für die Provisionierung der o.g. Daten auf das Gerät zuständig ist, erfolgt im Rahmen der Secure Zero Touch Onboarding-Verfahren vollautomatisiert - beispielsweise unter Verwendung der sog. "Automatic Discovery-Mechanismen" (wie z.B. mDNS, GRASP) .

In manchen OT-Einsatzumgebungen sollen nicht nur an das jeweilige Netzwerk angeschlossene OT-Geräte im Rahmen des Secure Device Onboarding oder gleich im Anschluss daran gerätespezifische LDevID-Generic-Zertifikate provisioniert bekommen, sondern auch die auf den OT-Geräten (beispielsweise in den sog. Docker-Containern) gehosteten Applikationen. Diese erhalten entsprechend die erforderlichen applikationsspezifischen LDevID-App-Zertifikate. Dabei spricht man vom Ausrollen (engl. Enrollment) der applikationsspezifischen Zertifikate. Dieser Schritt ist kein verbindlicher Bestandteil der bekannten Spezifikationen wie z.B. der o.g. BRSKI-Spezifikation. Er erweist sich jedoch in vielen bekannten OT-Deployment-Szenarien als sinnvoll und/oder sogar notwendig.

Aufgrund von dynamischen Kundenanforderungen und von ebenfalls dynamischen Anforderungen im Zusammenhang mit der Standardisierung/ Regulierung wird es perspektivisch OT-Geräte geben, die mehr als ein Secure Device Onboarding -Verfahren (d.h. mindestens zwei derartige Verfahren) unterstützen. Auch von den OT-Einsatzumgebungen (beispielsweise Fertigungswerken und verfahrenstechnischen Anlagen) selbst werden voraussichtlich mehrere Verfahren unterstützt werden müssen, was bedeutet, dass in einer Umgebung beispielsweise gleichzeitig ein BRSKI-Registrar und ein OPC UA-Registrar (nach OPC UA Part 21 "Device Provisioning") perspektivisch verfügbar sein werden.

Ein OT-Gerät, das mehrere Secure Device Onboarding-Verfahren unterstützt und in einer OT-Umgebung eingesetzt wird, die ebenfalls mehrere Secure Device Onboarding-Verfahren unterstützt (indem in dieser Umgebung verschiedene Registrars zu Verfügung gestellt werden), besitzt aktuell keine Information darüber, welchen Registrar es konkret in der jeweiligen Einsatzumgebung kontaktieren soll, und welches, für diese Einsatzumgebung passende (d.h. von dieser Einsatzumgebung unterstützte) Verfahren es verwenden soll. Falls ein OT-Gerät keines von den in der jeweiligen Einsatzumgebung zur Verfügung stehenden Secure Device Onboarding-Verfahren unterstützt, sollte dies möglichst frühzeitig erkannt werden, u.a. damit darauf möglichst adäquat reagiert werden kann. Stand heute ist dies nicht auf eine automatisierte Art und Weise möglich.

In der US 11 272 361 B1 ist ein Verfahren zur Integration einer technischen Komponente in ein Netzwerk offenbart.

In der WO 2022/028975 A1 ist ein System zum Verifizieren von Komponenten eines industriellen Systems offenbart.

In der EP 3 258 662 A1 ist ein Verfahren zur Registrierung eines intelligenten elektrischen Gerätes bei einer Zertifizierungsstelle offenbart.

Der Erfindung liegt die Aufgabe zugrunde, ein Verfahren zur Integration einer Anlagenkomponente in ein Kommunikationsnetzwerk einer technischen Anlage anzugeben, welches die zuvor ausgeführten Nachteile vermeidet und ein effizienteres und sichereres Integrieren der Anlagenkomponente ermöglicht.

Diese Aufgabe wird gelöst durch ein Verfahren mit den Merkmalen des Anspruchs 1. Außerdem wird die Aufgabe gelöst durch ein Verfahren mit den Merkmalen des Anspruchs 13. Zudem wird die Aufgabe gelöst durch einen computerimplementierten Integrationsdienst gemäß Anspruch 16. Zudem wird die Aufgabe gelöst durch ein computerimplementiertes Werkzeug gemäß Anspruch 17. Vorteilhafte Weiterbildungen ergeben sich aus den abhängigen Ansprüchen.

Ein erfindungsgemäßes Verfahren zur Integration einer Anlagenkomponente in ein Kommunikationsnetzwerk einer technischen Anlage umfasst die folgenden Merkmale:
a) Ermitteln eines Integrationsdienstes der technischen Anlage durch die Anlagenkomponente,
b) Übermitteln von Informationen bezüglich von der Anlagenkomponente unterstützter Integrationsverfahrenstypen an den Integrationsdienst der technischen Anlage,
c) Unter Berücksichtigung von dem Integrationsdienst der technischen Anlage zur Verfügung stehenden Informationen bezüglich von dem Kommunikationsnetzwerk der technischen Anlage unterstützter Integrationsverfahrenstypen und der von der Anlagenkomponente übermittelten Informationen bezüglich von der Anlagenkomponente unterstützter Integrationsverfahrenstypen, Prüfen durch den Integrationsdienst, ob eine automatisierte Integration der Anlagenkomponente in das Kommunikationsnetzwerk der technischen Anlage möglich ist,
d) Für den Fall, dass die automatisierte Integration der Anlagenkomponente in das Kommunikationsnetzwerk der technischen Anlage möglich ist, Durchführung der Integration der Anlagenkomponente in das Kommunikationsnetzwerk der technischen Anlage.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei der Anlagenkomponente der technischen Anlage kann es sich um ein beliebiges Gerät oder eine computerimplementierte Applikation handeln, die für eine Kommunikation mit weiteren Komponenten der technischen Anlage der Authentifizierung durch eines oder mehrere Zertifikate bedarf. Anlagenkomponenten der technischen Anlage können beispielsweise Vorrichtungen wie Pumpen, Ventile, Motoren, Heizkessel und dergleichen, aber auch Softwareprogramme sein.

Im Gegensatz zu aus dem Stand der Technik bekannten Integrationsverfahren für Anlagenkomponenten werden sowohl die der Anlagenkomponente zur Verfügung stehenden Integrationsverfahrenstypen als auch die im Kontext des Kommunikationsnetzwerkes der technischen Anlage verfügbaren Integrationsverfahrenstypen berücksichtigt. Es erfolgt erfindungsgemäß eine automatisierte Prüfung, ob ein automatisiertes Integrationsverfahren für die (spezielle) Anlagenkomponente im Kontext des (speziellen) Kommunikationsnetzwerkes der technischen Anlage möglich ist. Im Erfolgsfall, also wenn die automatisierte Integration der Anlagenkomponente in das Kommunikationsnetzwerk der technischen Anlage möglich ist, wird diese Integration automatisiert durchgeführt. Es bedarf dabei demnach keines Einbezuges eines Operators/Bedieners oder Administrators der technischen Anlage.

Im Rahmen des Ermittelns des Integrationsdienstes kann die Anlagenkomponente ein an sich bekanntes Erkennungsverfahren wie ein auf mDNS, GRASP, DNS oder DHCP basierendes Verfahren verwenden. Diese Verfahren sind in der IT-Welt etabliert und können vorteilhafterweise auch im Bereich einer Kommunikation innerhalb einer technischen Anlage angewandt werden.

Die Informationen, die die Anlagenkomponente an den Integrationsdienst des Kommunikationsnetzwerkes der technischen Anlage übermittelt, können in Form einer JSON-Datei und/oder als eine Security-Ereignismitteilung vorliegen.

Bevorzugt umfassen die Informationen zusätzlich ein oder mehrere von der Anlagenkomponente unterstützte Zertifikatsmanagementprotokolle. Diese zusätzlichen Informationen können von dem Integrationsdienst für die spätere Integration der Anlagenkomponente verwendet werden, worauf im weiteren Verlauf der Beschreibung noch eingegangen wird.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Ein Zertifikat wird für den Einsatz einer Anlagenkomponente in der technischen Anlage von einer Zertifizierungsstelle ausgestellt, die auch als eine sogenannte "Issuing CA (Certification Authority)" bezeichnet wird. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Das Zertifikat weist ein bestimmtes Zertifikatsprofil (engl. Certificate Profile) auf. Dabei umfasst das Zertifikatsprofil einen Typ des Zertifikats. Bei einem Typ kann es sich beispielsweise um ein TLS (Transport Layer Security) Server Zertifikat, ein TLS Client Zertifikat, ein OPC UA (Open Platform Communications Unified Architecture) Server Zertifikat oder um ein OPC UA Client Zertifikat handeln. Gemäß dem zugewiesenen Zertifikatstyp und ggf. weiteren zusätzlichen Anforderungen kann das Zertifikatsprofil bestimmte Zertifikatsattribute gemäß dem ITU-T-Standard X.509 und deren Werte umfassen. Dabei wird bei der Validierung anhand dieses Zertifikatsprofils jeder Zertifikatsantrag abgelehnt, der nicht alle festgelegten Attribute und Werte beinhaltet. Je mehr Attribute und/oder Werte durch das Zertifikatsprofil vorgeschrieben / festgelegt sind, desto strikter und genauer ist die Validierung.

Neben der sicheren Kommunikation ist für den optimalen Schutz der technischen Anlage die Einhaltung einer sicheren Gerätekonfiguration im Einklang mit verschiedenen Security-Anforderungen wie z.B. "Security by Default" und "Least Functionality" wichtig. Die Anlagenkomponente kann im Einklang mit dem Security-Konzept der technischen Anlage unter Verwendung der sog. Herstellergerätezertifikate (IDevID Cert. nach IEEE802.1AR) auf die Originalität geprüft werden.

Die Komponenten einer technischen Anlage kommunizieren in der Regel mit mehr als einem Kommunikationspartner und nutzen dabei mehr als ein sicheres Kommunikationsprotokoll. Beispielsweise kann ein industrielles Automatisierungssystem (AS) in der Regel sein webbasiertes User Interface per HTTPS für den Benutzerzugriff bereitstellen (wobei ein zugehöriges TLS Server Zertifikat zum Einsatz kommt) und gleichzeitig (in Rolle des OPC UA Server) per OPC UA mit den zugehörigen OPC UA-Clients kommunizieren. Deswegen sollten die Anlagenkomponenten in der Regel mehrere Zertifikate (LDevID Cert.) beantragen, wobei es aus Security-Sicht empfehlenswert ist, ein dedizierts Zertifikat pro Verwendungszweck zu beantragen bzw. zu nutzen.

Da in der Regel jedes zu einem bestimmten Zweck ausgestellte Zertifikat während seines Lebenszyklus nicht nur initial beantragt, sondern auch erneuert und/oder revoziert werden soll/kann, bietet beispielswese das o.g. CMP-Protokoll verschiedene sog. CMP-Messages, anhand deren die jeweilige Art des Zertifikatsantrags (bzw. der jeweilige zugrundeliegende Use Case) erkannt werden kann. Bekommt die Registrierungsstelle beispielsweise eine sog. IR-Message ("Initial Request") von einer Anlagenkomponente zugeschickt, so erkennt sie daran, dass es sich um eine initiale (erstmalige) Beantragung eines bestimmten Zertifikats handelt. An einer KUR- bzw. RR-Message erkennt sie einen Antrag zur Erneuerung bzw. zur Revokation eines bestehenden Zertifikats.

Auch wenn alle Zertifikatstypen wie TLS Server, TLS Client, OPC UA Server oder OPC UA Client Zertifikate aus rein technischer Sicht von einer gleichen Zertifizierungsstelle (engl. Certification Authority (CA)) ausgestellt werden könnten, wird im Hinblick auf Security eine Trennung und somit die Verwendung einer dedizierten Zertifizierungsstelle pro Verwendungszweck bzw. pro Kommunikationsprotokoll (wie z.B. TLS, OPC UA) empfohlen. Der Grund besteht darin, dass, wenn ein Gerät mehrere verschiedene Zertifikate für verschiedene Zwecke bzw. mehrere vom Gerät verwendete Kommunikationsprotokolle nutzt, die von derselben Zertifizierungsstelle ausgestellt wurden und diese Zertifizierungsstelle kompromittiert wird, das Gerät über kein sicheres Kommunikationsprotokoll mehr kommunizieren kann, denn sein (einziges) von einer kompromittierten Zertifizierungsstelle ausgestelltes und beglaubigtes Zertifikat gilt somit als nicht mehr vertrauenswürdig.

Auch für den Fall, dass gemäß der o.g. Empfehlung verschiedene Zertifizierungsstellen zum Ausstellen von Zertifikaten zu verschiedenen Verwendungszwecken/ Kommunikationsprotokollen zum Einsatz kommen, kann die Zertifikatsbeantragung in der Regel über eine (zentrale) Registrierungsstelle (RA) erfolgen. Dabei kann die Registrierungsstelle den Verwendungszweck des anvisierten Zertifikats beispielsweise anhand der Inhalte des Zertifikatsantrags oder anhand des http-/https-Pfades, über welchen sie den Zertifikatsantrag erhält, erkennen.

Falls eine entsprechende Konfiguration vorgenommen wurde, kann die Registrierungsstelle in der Regel die verschiedenen Zertifikatsanträge an die verschiedenen zuständigen Zertifizierungsstellen weiterleiten. Hierzu ist es zu erwähnen, dass bei der Nutzung des CMP-Protokolls es prinzipiell möglich ist, dass die Anlagenkomponenten die zu adressierende Zertifizierungsstelle im Feld "recipient" entsprechend angeben. Dies setzt jedoch voraus, dass sie verschiedene Zertifizierungsstellen und deren Zuordnung zu den verschiedenen Zertifikatsprofilen "kennen", was in der Praxis eher selten der Fall ist. Normalerweise ist den Anlagenkomponenten nur die Registrierungsstelle (oder im Falle von segmentierten Netzwerken die zuständige lokale Registrierungsstelle (LRA)) als Ansprechpartner für die Zertifikatsbeantragung bekannt.

Besonders bevorzugt prüft der Integrationsdienst bei der Kontaktaufnahme durch die Anlagenkomponente eine Identität der Anlagenkomponente, insbesondere unter Verwendung einer von einem Hersteller oder einem Integrator der Anlagenkomponente auf der Anlagenkomponente hinterlegten Identifizierungsinformation gemäß dem Standard IEEE 802.1AR-2018. Dadurch lässt sich sicherstellen, dass keine unbefugte Integration der Anlagenkomponente in das Kommunikationsnetzwerk der technischen Anlage erfolgen kann.

Die Informationen bezüglich von dem Kommunikationsnetzwerk der technischen Anlage unterstützter Integrationsverfahrenstypen können dem Integrationsdienst zuvor im Rahmen einer Projektierung einer Automatisierung der technischen Anlage zur Verfügung gestellt worden sein. Aber auch während der Laufzeit der technischen Anlage können diese Informationen dem Integrationsdienst, beispielsweise von einem Administrator des Kommunikationsnetzwerkes, zur Verfügung gestellt worden sein.

Für den Fall, dass die automatisierte Integration der Anlagenkomponente in das Kommunikationsnetzwerk der technischen Anlage nicht möglich ist, wird bevorzugt ein Bediener der technischen Anlage darüber informiert, insbesondere durch Erzeugen einer entsprechenden Meldung. Der Bediener kann daraufhin adäquate Maßnahmen ergreifen und beispielsweise eine überarbeitete Firmware auf der Anlagenkomponente implementieren.

Im Rahmen einer vorteilhaften Weiterbildung der Erfindung kann der Integrationsdienst überprüfen, ob die automatisierte Integration korrekt durchgeführt worden ist, und für den Fall eine erfolgreichen Prüfung die Anlagenkomponente für eine Kommunikation in dem Kommunikationsnetzwerk der technischen Anlage freigegeben. Dadurch kann sichergestellt werden, dass die Integration auch ordnungsgemäß vorgenommen wurde.

Im Rahmen der Durchführung der Integration der Anlagenkomponente können besonders vorteilhaft die folgenden Schritte durchgeführt werden:
i) Übermitteln eines Integrationsplanes von dem Integrationsdienst an die Anlagenkomponente, wobei der Integrationsplan Informationen darüber umfasst, welcher Integrationsverfahrenstyp oder welche Integrationsverfahrenstypen, gegebenenfalls in welcher Reihenfolge, in wenigstens einem Integrationsschritt zur Anwendung kommen und welcher Integrationspartner der technischen Anlage dabei jeweils zum Einsatz kommt,
ii) Automatisiertes Durchführen des Integrationsschrittes oder der Mehrzahl von Integrationsschritten.

Der Integrationsdienst erstellt auf Basis der ihm zur Verfügung gestellten Informationen einen Integrationsplan für die Anlagenkomponente. Dabei enthält der Integrationsplan wenigstens Information darüber, welcher Integrationsverfahrenstyp zur Anwendung und welcher Integrationspartner der technischen Anlage dabei jeweils zum Einsatz kommen soll. Für den Fall, dass mehrere Integrationsverfahrenstypen in Frage kommen (die Schnittmenge zwischen den von der Anlagenkomponenten unterstützten und den von dem Kommunikationsnetzwerk verwendeten Integrationsverfahrenstypen also größer Eins ist), kann der Integrationsplan eine Priorisierung der Integrationsverfahrenstypen umfassen. Der Integrationsplan kann eine Mehrzahl von einzelnen Integrationsschritten umfassen, für die jeweils der Integrationsverfahrenstyp und der dazugehörige Integrationspartner des Kommunikationsnetzwerkes in dem Integrationsplan festgelegt sind. Bei dem Integrationspartner kann es sich beispielsweise um einen "Provisioning-Server", um einen "Secure Device Onboarding Server" oder um einen Registrar wie dem Integrationsdienst handeln.

Bevorzugt prüft der Integrationsdienst für wenigstens einen, vorzugsweise jeden Integrationsschritt, ob dieser korrekt ausgeführt worden ist. Dadurch erhält der Integrationsdienst eine feingranulare Rückmeldung darüber, ob der jeweilige Integrationsschritt erfolgreich durchlaufen wurde und kann im Bedarfsfall ohne eine weitere Verzögerung adäquate Maßnahmen einleiten (beispielsweise eine entsprechende Mitteilung an einen Operator der technischen Anlage erzeugen).

Die Prüfung kann der Integrationsdienst auf Basis einer Protokollierung des durchgeführten Integrationsverfahrens vornehmen, wobei die Protokollierung von der Anlagenkomponente im Rahmen wenigstens einen, vorzugsweise jedes, Integrationsschrittes erstellt und an den Integrationsdienst der technischen Anlage übertragen oder von diesem abrufbar hinterlegt wird. Der Integrationsdienst kann die Protokollierung direkt an den Integrationsdienst übermitteln oder diese in einem Speicher (beispielsweise auf der Anlagenkomponente selbst) hinterlegen, derart, dass der Integrationsdienst die Protokollierung unmittelbar nach der Durchführung des jeweiligen Integrationsschrittes abrufen kann.

Der Integrationsplan kann Informationen über Zertifikatsprofile und/oder Schlüsselverwendungszwecke umfassen, welche bei einer Beantragung von Zertifikaten für die Anlagenkomponente für eine Kommunikation in dem Kommunikationsnetzwerk zu berücksichtigen sind.

Die zuvor formulierte Aufgabe wird außerdem gelöst durch ein Verfahren zur virtuellen Integration einer für die Integration vorgesehenen Anlagenkomponente in ein Kommunikationsnetzwerk einer technischen Anlage im Rahmen einer Projektierung einer Automatisierung der technischen Anlage durch ein Projektierungswerkzeug, wobei unter Berücksichtigung von Informationen bezüglich von dem Kommunikationsnetzwerk der technischen Anlage unterstützter Integrationsverfahrenstypen und von Informationen bezüglich von der Anlagenkomponente unterstützter Integrationsverfahrenstypen, durch das Projektierungswerkzeug oder einen von dem Projektierungswerkzeug beauftragten Dienst geprüft wird, ob eine automatisierte Integration der Anlagenkomponente in das Kommunikationsnetzwerk der technischen Anlage möglich ist.

Im Rahmen dieses Verfahrens wird zunächst geprüft, ob eine automatisierte Integration der Anlagenkomponente in das Kommunikationsnetzwerk der technischen Anlage möglich ist. Diese Prüfung erfolgt unter Verwendung eines digitalen Zwillings der Anlagenkomponente. Dieser digitale Zwilling verhält sich wie die reale, physische Anlagenkomponente und wird von dem Projektierungswerkzeug oder von einem von ihm beauftragen Dienst bereitgestellt. Mit anderen Worten wird die Anlagenkomponente emuliert. Diese emulierte Anlagenkomponente kann mit dem (tatsächlich implementierten oder auch emulierten) Integrationsdienst des Kommunikationsnetzwerkes interagieren. Der Vorteil dieses Verfahrens liegt darin, dass zunächst geprüft werden kann, ob die Anlagenkomponente automatisiert in das Kommunikationsnetzwerk der technischen Anlage integriert werden kann.

Für den Fall, dass die automatisierte Integration der Anlagenkomponente in das Kommunikationsnetzwerk der technischen Anlage möglich ist, kann daraufhin die Anlagenkomponente physisch in der technischen Anlage angeordnet und die Durchführung der Integration der Anlagenkomponente in das Kommunikationsnetzwerk der technischen Anlage wie zuvor erläutert vorgenommen werden.

Für den Fall, dass die automatisierte Integration der Anlagenkomponente in das Kommunikationsnetzwerk der technischen Anlage nicht möglich ist, kann die für die Integration vorgesehene Anlagenkomponente zunächst virtuell überarbeitet werden, insbesondere eine überarbeitete Firmware auf der Anlagenkomponente virtuell implementiert werden, wobei nach der virtuellen Überarbeitung der Anlagenkomponente das Verfahren wie zuvor erläutert erneut durchgeführt wird. Für den Fall, dass die automatisierte Integration der Anlagenkomponente in das Kommunikationsnetzwerk der technischen Anlage nun möglich ist, wird die Anlagenkomponente auch physisch überarbeitet und in der technischen Anlage angeordnet, und die Durchführung der Integration der Anlagenkomponente in das Kommunikationsnetzwerk der technischen Anlage wie zuvor erläutert vorgenommen. Es sind auch mehrere Iterationen möglich, um eine Kompatibilität für die automatisierte Integration der Anlagenkomponente zu erreichen.

Die zuvor formulierte Aufgabe wird zudem gelöst durch einen computerimplementierten Registrierungsdienst für eine technische Anlage, der dazu ausgebildet ist, ein Verfahren wie zuvor erläutert durchzuführen.

Die zuvor formulierte Aufgabe wird außerdem gelöst durch ein computerimplementiertes Werkzeug, das dazu ausgebildet ist, ein Verfahren wie zuvor erläutert durchzuführen.

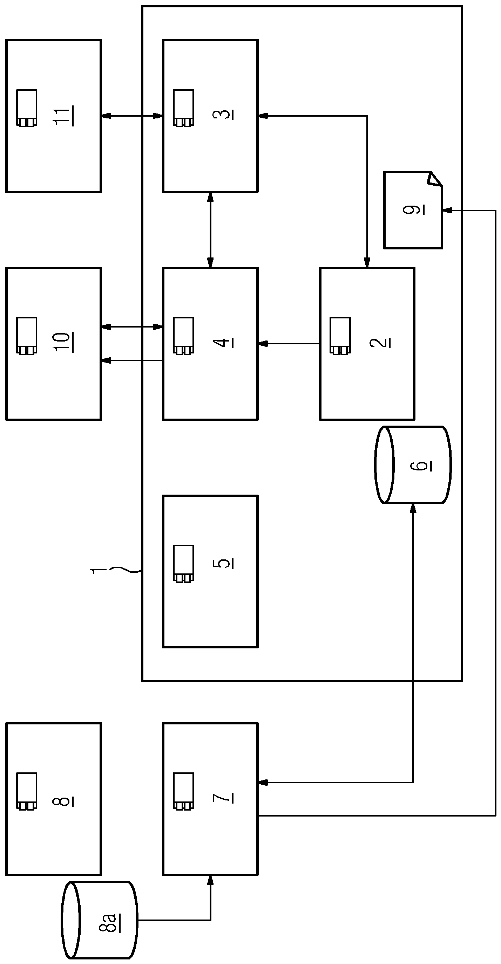

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist schematisch eine Anlagenkomponente 1 dargestellt, die in ein Kommunikationsnetzwerk einer als Prozessanlage ausgebildeten technischen Anlage integriert werden soll. Ziel hierbei ist, dass die Anlagenkomponente 1 mit weiteren Komponenten der technischen Anlage über das Kommunikationsnetzwerk kommunizieren kann bzw. darf.

In der Anlagenkomponente 1 sind ein Integrationsassistent 2, ein "CMP-Client" 3 gemäß dem "Certificate Management Protocol", ein "BRSKI-Pledge" 4 gemäß dem "Bootstrapping Remote Secure Key Infrastructure" Protokoll der Arbeitsgruppe "IETF ANIMA", und ein "Provisioning Client" 5 gemäß dem OPC UA (O-pen Platform Communications United Architecture) Standard computerimplementiert. Des Weiteren weist die Anlagenkomponente 1 einen Speicher 6 auf.

Im Folgenden wird ein Ablauf eines Integrationsverfahrens erläutert: Der Integrationsassistent 2 der Anlagenkomponente 1 führt im ersten Schritt ein automatisches Erkennungsverfahren (engl. Automatic Discovery) durch. Dieses kann beispielsweise auf dem mDNS (Multicast Domain Name System) Protokoll oder dem GRASP (GeneRic Autonomic Signaling Protocol) Protokoll basieren. Durch das Erkennungsverfahren kann der Integrationsassistent 2 der Anlagenkomponente 1 einen Integrationsdienst 7 der technischen Anlage identifizieren.

Der Integrationsdienst 7 prüft daraufhin zunächst eine Identität der Anlagenkomponente 1, insbesondere unter Verwendung einer von einem Hersteller oder einem Integrator der Anlagenkomponente 1 in dem Speicher 6 der Anlagenkomponente 1 hinterlegten Identifizierungsinformation gemäß dem Standard IEEE 802.1AR-2018. Hat er die Identität der Anlagenkomponente 1 erfasst, lässt er einen Datenaustausch zwischen der Anlagenkomponente 1 und dem Integrationsdienst 7 zu. Dafür kann beispielsweise eine Netzwerkzugangskontrolle nach IEEE 802.1X, eine WLAN-Geräteauthentisierung nach IEEE 802.11 oder eine 5G-Onboarding-Netzwerkzugangsauthentisierung nach 3GPP TS23.501 und TS33.501 verwendet werden. Die Anlagenkomponente 1 kann sich dabei mittels einer Identifizierungsinformation gemäß dem Standard IEEE 802.1AR-2018 authentisieren, insbesondere mittels eines IDevID-Gerätezertifikats. Es ist jedoch auch möglich, dass die Anlagenkomponente 1 eine Netzwerkzugangsidentität (Network Access Identifier, NAI) abhängig von einer Seriennummer oder abhängig von einer MAC-Adresse oder abhängig von einer IMEI-Identität wählt. In einer Variante kann die Zulässigkeit der ermittelten Identifizierungsinformation geprüft werden, bevor der Datenaustausch zwischen der Anlagenkomponente 1 und dem Integrationsdienst 7 zugelassen wird. Der Integrationsassistent 2 der Anlagenkomponente 1 übermittelt darauf Informationen bezüglich von der Anlagenkomponente 1 unterstützter Integrationsverfahrenstypen und Zertifikatsmanagementprotokolle an den Integrationsdienst 7 der technischen Anlage, beispielsweise in Form eines JSON-Objektes. Weitere Beispiele sind ein XML-Objekt, ein CBOR-Objekt oder ein ASN.1-Objekt.

Unter Berücksichtigung von dem Integrationsdienst 7 der technischen Anlage zur Verfügung stehenden Informationen bezüglich von dem Kommunikationsnetzwerk der technischen Anlage unterstützter Integrationsverfahrenstypen und der von der Anlagenkomponente 1 übermittelten Informationen bezüglich von der Anlagenkomponente 1 unterstützter Integrationsverfahrenstypen, prüft der Integrationsdienst 7, ob eine automatisierte Integration der Anlagenkomponente 1 in das Kommunikationsnetzwerk der technischen Anlage möglich ist. Die automatisierte Integration wird auch "Secure Device Onboarding" bezeichnet.

Die Informationen bezüglich von dem Kommunikationsnetzwerk der technischen Anlage unterstützter Integrationsverfahrenstypen entnimmt der Integrationsdienst 7 einem computerimplementierten Werkzeug 8, welches u.a. der Erstellung einer Projektierung einer Automatisierung der technischen Anlage dient. Das computerimplementierte Werkzeug 8 weist einen Speicher 8a auf, in welchem die entsprechenden Informationen hinterlegt sind.

Falls bei der Prüfung festgestellt wird, dass die Anlagenkomponente 1 keines von den in der jeweiligen Einsatzumgebung der technischen Anlage zur Verfügung stehenden (Secure Device Onboarding) Integrationsverfahrenstypen unterstützt, wird das automatisierte Integrieren (Secure Device Onboarding) unterbunden. Zusätzlich wird ein Operator der technischen Anlage auf eine adäquate Art und Weise (beispielsweise durch eine entsprechende Meldung) informiert, dass er die Anlagenkomponente 1 manuell überprüfen und die notwendigen Daten auf die Anlagenkomponente 1 provisionieren soll.

Für den Fall, dass die automatisierte Integration der Anlagenkomponente 1 in das Kommunikationsnetzwerk der technischen Anlage möglich ist, erstellt der Integrationsdienst 7 einen Integrationsplan 9 und übermittelt diesen dem Integrationsassistenten 2 der Anlagenkomponente 1. Der Integrationsplan 9 umfasst Informationen darüber, welcher Integrationsverfahrenstyp oder welche Integrationsverfahrenstypen, gegebenenfalls in welcher Reihenfolge, in wenigstens einem Integrationsschritt zur Anwendung kommen und welcher Integrationspartner der technischen Anlage dabei jeweils zum Einsatz kommen soll. Zudem umfasst der Integrationsplan Informationen über Zertifikatsprofile und/oder Schlüsselverwendungszwecke, welche bei einer Beantragung von Zertifikaten für die Anlagenkomponente 1 für eine Kommunikation in dem Kommunikationsnetzwerk zu berücksichtigen sind. Dabei beschreibt ein Zertifikatsprofil die wesentlichen Inhalte/ Bestandteile eines bestimmten Zertifikatstyps und kann beispielsweise in Form einer maschinenlesbaren XML-Datei vorliegen. Beispiele für solche Zertifikatsprofile (die z.B. in Form einer XML-Datei vorliegen können)sind:
- ein gerätespezifisches Locally Significant Device Identifier Generic Certificate (manchmal auch als Customer Device Certificate bezeichnet)
- Verschiedene applikationsspezifische (auch als operativ bezeichnete) Zertifikate wie z.B. ein TLS Client Certificate, TLS Server Certificate, Signing Certificate, OPC UA Client Certificate, OPC UA Server Certificate.
- Schlüsselverwendungszwecke (engl. Key Usage) sind z.B. "Digital Signature", "Key Encipherment", "keyAgreement". Das sind standardisierte Bezeichnungen gemäß dem RFC 5280 für den jeweiligen Zweck, zu dem der zugehörige Schlüssel (bzw. das zugehörige Schlüsselpaar, wobei der Öffentliche Schlüssel im Zertifikat enthalten ist und der Private Schlüssel sicher hinterlegt ist) verwendet werden darf.

Im vorliegend beschriebenen Ausführungsbeispiel ist der "gemeinsame Nenner" von Anlagenkomponente 1 und Kommunikationsnetzwerk ein auf dem BRSKI-Protokoll basierendes Integrationsverfahren.

Im Rahmen des Integrationsverfahrens führt der BRSKI-Pledge 4 ein auf dem mDNS Protokoll basierendes automatisches Erkennungsverfahren (Automatic Discovery) durch, um einen BRSKI-Registrar 10 des Kommunikationsnetzwerkes zu ermitteln. Alternativ ist beispielsweise auch eine direkte Kontaktaufnahme zu dem BRSKI-Registrar 10 auf Basis von Kontaktdaten möglich, welche in dem Integrationsplan 9 enthalten sind. Ein LDevID-Generic Zertifikat wird daraufhin unter Verwendung der BRSKI-Erweiterung BRSKI-AE unter Mitwirkung des CMP-Clients 3 in Verbindung mit einer Zertifizierungsstelle 11 der technischen Anlage für die Anlagenkomponente 1 erteilt. Dann werden applikationsspezifische LDevID-Zertifikate unter Mitwirkung des CMP-Clients 3 in Verbindung mit einer Zertifizierungsstelle 11 der technischen Anlage für die Anlagenkomponente 1 erteilt. Diese applikationsspezifischen Zertifikate nutzen die einzelnen Dienste/Anwendungen der Anlagenkomponente 1 wie ein mTLS-Client (Mutual Transport Layer Security) für die Kommunikation mit Partner innerhalb des Kommunikationsnetzwerkes der technischen Anlage.

Der Integrationsdienst 7 überwacht jeden Integrationsschritt des Integrationsverfahrens anhand von Protokolldaten, die der Integrationsassistent 2 in dem Speicher 6 der Anlagenkomponente 1 hinterlegt. Hierzu hat der Integrationsdienst 7 einen entsprechenden Zugriff auf den Speicher 6 der Anlagenkomponente 1 erhalten. Alternativ oder zusätzlich kann der Integrationsassistent 2 der Anlagenkomponente 1 zur Protokollierung des jeweiligen Integrationsschrittes eine Mitteilung erzeugen, die an den Integrationsdienst 7 der technischen Anlage übermittelt wird.

Alternativ oder zusätzlich können die erzeugten Mitteilungen (beispielsweise per Syslog) an eine zentrale Instanz (wie beispielsweise einen Syslog-Sever oder ein sog. Security Information Event Management (SIEM) System) übermittelt werden, welches die Mitteilungen ggf. auswertet und/oder anderen Instanzen wie z.B. dem Integrationsdienst und/oder dem Benutzer zur Verfügung stellt sowie ggf. zwecks Audits/ Rückverfolgbarkeit/ Forensik für eine bestimmte Dauer (z.B. 90 Tage) archiviert.

Durch die o.g. Auswertung der einzelnen oder mehreren Meldungen anhand bestimmter (ggf. dynamisch und/oder KI-basiert konfigurierbarer) Regeln können ggf. bestimmte Aktionen automatisch angestoßen werden oder der Benutzer entsprechend informiert oder zu bestimmten Aktionen aufgefordert werden.

Im Anschluss an die erfolgreiche Durchführung des Integrationsplans erfolgt die Freigabe der Anlagenkomponente 1 für die operative Nutzung im Kommunikationsnetzwerk der technischen Anlage.

Das beschriebene Integrationsverfahren kann beispielsweis bei einer Erstinbetriebnahme der Anlagenkomponente 1 in der technischen Anlage eingesetzt werden. Aber auch bei einem Ersatz einer bisherigen Anlagenkomponente durch die jetzige Anlagenkomponente 1 kann das Verfahren zum Einsatz kommen. Mit der Unterstützung des Integrationsdienstes 7 erfolgt dabei die Übernahme der Informationen der bisherigen Anlagenkomponente 1, d.h. der für die neue jetzige, neue Anlagenkomponente 1 erstellte Integrationsplan wird an die Informationen und den ursprünglichen Integrationsplan der bisherigen Anlagenkomponente 1 (der beispielsweise in einem für den Integrationsdienst 7 zugänglichen Archiv abgelegt ist) angelehnt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Integration einer Anlagenkomponente (1) in ein Kommunikationsnetzwerk einer technischen Anlage, umfassend:
a) Ermitteln eines Integrationsdienstes (7) der technischen Anlage durch die Anlagenkomponente (1),
b) Übermitteln von Informationen bezüglich von der Anlagenkomponente (1) unterstützter Integrationsverfahrenstypen an den Integrationsdienst (7) der technischen Anlage,
c) Unter Berücksichtigung von dem Integrationsdienst (7) der technischen Anlage zur Verfügung stehenden Informationen bezüglich von dem Kommunikationsnetzwerk der technischen Anlage unterstützter Integrationsverfahrenstypen und der von der Anlagenkomponente (1) übermittelten Informationen bezüglich von der Anlagenkomponente (1) unterstützter Integrationsverfahrenstypen, Prüfen durch den Integrationsdienst (7), ob eine automatisierte Integration der Anlagenkomponente (1) in das Kommunikationsnetzwerk der technischen Anlage möglich ist,
d) Für den Fall, dass die automatisierte Integration der Anlagenkomponente (1) in das Kommunikationsnetzwerk der technischen Anlage möglich ist, Durchführung der Integration der Anlagenkomponente (1) in das Kommunikationsnetzwerk der technischen Anlage.

2. Verfahren nach Anspruch 1, bei dem die Anlagenkomponente (1) zum Ermitteln des Integrationsdienstes (7) ein automatisches Erkennungsverfahren, insbesondere ein auf mDNS, GRASP, DNS oder DHCP basierendes Verfahren, verwendet.

3. Verfahren nach Anspruch 1 oder 2, bei dem die Informationen gemäß Schritt b als eine JSON-Datei und/oder als eine Security-Ereignismitteilung an den Integrationsdienst (7) der Anlagenkomponente (1) übermittelt werden.

4. Verfahren nach einem der vorangegangenen Ansprüche, bei dem die in Schritt b übermittelten Information zusätzlich ein oder mehrere von der Anlagenkomponente (1) unterstützte Zertifikatsmanagementprotokolle umfassen.

5. Verfahren nach einem der vorangegangenen Ansprüche, bei dem der Integrationsdienst (7) eine Identität der Anlagenkomponente (1) prüft, insbesondere unter Verwendung einer von einem Hersteller oder einem Integrator der Anlagenkomponente (1) auf der Anlagenkomponente (1) hinterlegten Identifizierungsinformation gemäß dem Standard IEEE 802.1AR-2018.

6. Verfahren nach einem der vorangegangenen Ansprüche, bei dem die Informationen bezüglich von dem Kommunikationsnetzwerk der technischen Anlage unterstützter Integrationsverfahrenstypen dem Integrationsdienst zuvor im Rahmen einer Projektierung einer Automatisierung der technischen Anlage zur Verfügung gestellt worden sind.

7. Verfahren nach einem der vorangegangenen Ansprüche, bei dem für den Fall, dass die automatisierte Integration der Anlagenkomponente (1) in das Kommunikationsnetzwerk der technischen Anlage nicht möglich ist, ein Bediener der technischen Anlage darüber informiert wird, insbesondere durch Erzeugen einer entsprechenden Meldung.

8. Verfahren nach einem der vorangegangenen Ansprüche, bei dem der Integrationsdienst (7) überprüft, ob die automatisierte Integration korrekt durchgeführt worden ist, und bei dem für den Fall eine erfolgreichen Prüfung die Anlagenkomponente (1) für eine Kommunikation in dem Kommunikationsnetzwerk der technischen Anlage freigegeben wird.

9. Verfahren nach einem der vorangegangenen Ansprüche, bei dem im Rahmen der Durchführung der Integration der Anlagenkomponente (1) die folgenden Schritte durchgeführt werden:
i) Übermitteln eines Integrationsplanes von dem Integrationsdienst (7) an die Anlagenkomponente (1), wobei der Integrationsplan Informationen darüber umfasst, welcher Integrationsverfahrenstyp oder welche Integrationsverfahrenstypen, gegebenenfalls in welcher Reihenfolge, in wenigstens einem Integrationsschritt zur Anwendung kommen und welcher Integrationspartner der technischen Anlage dabei jeweils zum Einsatz kommt,
ii) Automatisiertes Durchführen des Integrationsschrittes oder der Mehrzahl von Integrationsschritten.

10. Verfahren nach Anspruch 9, bei dem der Integrationsplan Informationen über Zertifikatsprofile und/oder Schlüsselverwendungszwecke umfasst, welche bei einer Beantragung von Zertifikaten für die Anlagenkomponente (1) für eine Kommunikation in dem Kommunikationsnetzwerk zu berücksichtigen sind.

11. Verfahren nach einem der Ansprüche 8 bis 10, bei dem der Integrationsdienst (7) für wenigstens einen, vorzugsweise jeden, Integrationsschritt prüft, ob dieser korrekt ausgeführt worden ist.

12. Verfahren nach Anspruch 11, bei dem die Prüfung durch den Integrationsdienst (7) auf Basis einer Protokollierung des durchgeführten Integrationsverfahrens vorgenommen wird, wobei die Protokollierung von der Anlagenkomponente (1) im Rahmen wenigstens einen, vorzugsweise jedes, Integrationsschrittes erstellt und an den Integrationsdienst (7) der technischen Anlage übertragen oder von diesem abrufbar hinterlegt wird.

13. Verfahren zur virtuellen Integration einer für die Integration vorgesehenen Anlagenkomponente (1) in ein Kommunikationsnetzwerk einer technischen Anlage im Rahmen einer Projektierung einer Automatisierung der technischen Anlage durch ein Projektierungswerkzeug (8), wobei unter Berücksichtigung von Informationen bezüglich von dem Kommunikationsnetzwerk der technischen Anlage unterstützter Integrationsverfahrenstypen und von Informationen bezüglich von der Anlagenkomponente (1) unterstützter Integrationsverfahrenstypen, durch das Projektierungswerkzeug (8) oder einen von dem Projektierungswerkzeug (8) beauftragten Dienst geprüft wird, ob eine automatisierte Integration der Anlagenkomponente (1) in das Kommunikationsnetzwerk der technischen Anlage möglich ist.

14. Verfahren nach Anspruch 13, bei dem für den Fall, dass die automatisierte Integration der Anlagenkomponente (1) in das Kommunikationsnetzwerk der technischen Anlage möglich ist, die Anlagenkomponente (1) physisch in der technischen Anlage angeordnet und die Durchführung der Integration der Anlagenkomponente (1) in das Kommunikationsnetzwerk der technischen Anlage gemäß einem der Ansprüche 1 bis 12 vorgenommen wird.

15. Verfahren nach Anspruch 13, bei dem für den Fall, dass die automatisierte Integration der Anlagenkomponente (1) in das Kommunikationsnetzwerk der technischen Anlage nicht möglich ist, die für die Integration vorgesehene Anlagenkomponente (1) zunächst virtuell überarbeitet wird, insbesondere eine überarbeitete Firmware auf der Anlagenkomponente (1) virtuell implementiert wird, wobei nach der virtuellen Überarbeitung der Anlagenkomponente (1) das Verfahren gemäß Anspruch 11 erneut durchgeführt wird, wobei für den Fall, dass die automatisierte Integration der Anlagenkomponente (1) in das Kommunikationsnetzwerk der technischen Anlage nun möglich ist, die Anlagenkomponente (1) auch physisch überarbeitet und in der technischen Anlage angeordnet wird, und die Durchführung der Integration der Anlagenkomponente (1) in das Kommunikationsnetzwerk der technischen Anlage gemäß einem der Ansprüche 1 bis 12 vorgenommen wird.

16. Computerimplementierter Integrationsdienst (7) für eine technische Anlage, der dazu ausgebildet ist, ein Verfahren gemäß einem der Ansprüche 1 bis 12 durchzuführen.

17. Computerimplementiertes Werkzeug (8), das dazu ausgebildet ist, ein Verfahren gemäß einem der Ansprüche 13 bis 15 durchzuführen.
